# EUROPEAN PATENT APPLICATION

(11) **EP 4 765 051 A1**
(43) Date of publication of application: **24.06.2026**
(21) Application number: 25224215.1
(22) Date of filing: 17.12.2025
(51) Int. Cl.: G06V 20/59, G06V 10/22, G06V 10/25, G06V 10/82, G06V 40/10

(54) **OCCUPANT SENSING DEVICE AND OCCUPANT SENSING METHOD**

(30) Priority: 19.12.2024 JP 2024223985
(71) Applicant: Faurecia Clarion Electronics Co., Ltd., Saitama-shi, Saitama 330-0081 (JP)
(72) Inventor: KOGA, Masashi, SAITAMA-SHI, 330-0081 (JP); MURAKAMI, Tetsuro, SAITAMA-SHI, 330-0081 (JP)
(74) Representative: Lavoix

(57) **Abstract**

An occupant sensing device (11) includes an acquisition unit (111) that is configured to acquire an image (PC) capturing an occupant (M) and seats (S) in a vehicle (1); a detection unit (112) that is configured to detect, based on the captured image (PC) and for each of the seats (S) in the vehicle (1), whether or not the seat (S) is flipped-up, whether or not the seat (S) is folded, and whether or not the seat (S) is reclined by a prescribed angle (φA) or more, as a layout (LS) of the seat (S); a setting unit (113) that is configured to set, in the captured image (PC), a region (R) corresponding to a seat (S) in which the occupant (M) can sit, in accordance with the layout (LS) of the seat (S); and a sensing unit (114) that is configured to sense whether or not the occupant (M) is positioned in the seat (S) based on the region (R) set by the setting unit (113).

## Description

### TECHNICAL FIELD

The present invention relates to an occupant sensing device and an occupant sensing method.

### BACKGROUND ART

When recognizing an occupant based on an image captured by a camera installed inside a vehicle, a region where the occupant is expected to be seated is set in the image, and the region in the image is used to sense whether the occupant is in the seat, or the orientation of the occupant and the like. For example, CN 115187965 A discloses the following: by collecting reference images of a passenger sitting in a normal seat, the facial area of the passenger in a normal seating position is determined based on the reference images, and based on this, the theoretical seat area is estimated. In this manner, the seating part can more realistically reflect regions on the target image that are highly correlated with whether a passenger is sitting in a prescribed position.

### SUMMARY

However, the seat arrangement may be changed by the seats installed in the vehicle being flipped-up against the wall surface of the vehicle or the backrests of the seat being folded down. To more accurately sense the state of the occupants, changes in the seat arrangement in the region need to be reflected. In such a case, the technology described in Patent Document 1 and the like is unable to set the region appropriately, and therefore may be unable to accurately sense whether or not an occupant is sitting in the seat. An object of the present invention is to provide an occupant sensing device and an occupant sensing method that can accurately sense whether or not an occupant is sitting in a seat.

The present disclosure relates to an occupant sensing device including an acquisition unit that is configured to acquire an image capturing an occupant and seats in a vehicle; a detection unit that is configured to detect, based on the captured image and for each of the seats in the vehicle, whether or not the seat is flipped-up, whether or not the seat is folded, and whether or not the seat is reclined by a prescribed angle or more, as a layout of the seat; a setting unit that is configured to set, in the captured image, a region corresponding to a seat in which the occupant can sit, in accordance with the layout of the seat; and a sensing unit that is configured to sense whether or not the occupant is positioned in the seat based on the region set by the setting unit.

The present disclosure also relates to an occupant sensing method including acquiring an image with an occupant and seats in a vehicle; detecting, based on the captured image and for each of the seats in the vehicle, whether or not the seat is flipped-up, whether or not the seat is folded, and whether or not the seat is reclined by a prescribed angle or more, as a layout of the seat; setting, in the captured image, a region corresponding to a seat in which the occupant can sit, in accordance with the layout of the seat; and sensing whether or not the occupant is positioned in the seat based on the set region.

According to the occupant sensing device and occupant sensing method of the present invention, whether or not an occupant is sitting in a seat can be sensed in an appropriate manner.

### BRIEF DESCRIPTION OF THE DRAWINGS

FIG. 1 is a diagram depicting an example of a configuration of seats positioned in a vehicle;
FIG. 2 is a diagram depicting an example of a configuration of an occupant sensing device;
FIG. 3 is a diagram depicting an example of a functional configuration of a processor of the occupant sensing device;
FIG. 4 is a diagram depicting an example of a functional configuration of a memory of the occupant sensing device;
FIG. 5 is a diagram depicting an example of the relationship between an image and a region;
FIG. 6 is a diagram depicting an example of the relationship between an image including a seat in a flipped-up state and a region;
FIG. 7 is a diagram depicting an example of the relationship between an image including a seat in a folded state and a region;
FIG. 8 is a diagram depicting an example of the relationship between an image including a seat in a reclined state and a region; and
FIG. 9 is a flowchart depicting an example of processing performed by the occupant sensing device.

### DETAILED DESCRIPTION

With respect to the use of plural and/or singular terms herein, those having skill in the art can translate from the plural to the singular and/or from the singular to the plural as is appropriate to the context and/or application. The various singular/plural permutations may be expressly set forth herein for the sake of clarity.

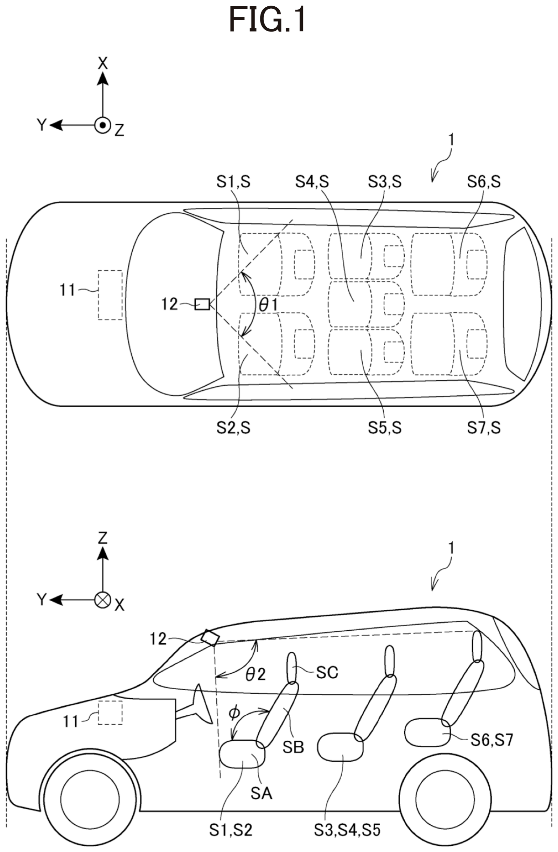

An embodiment of the present invention will be described below with reference to the drawings. FIG. 1 is a diagram depicting an example of the configuration of a seat S positioned in a vehicle 1. The upper part of FIG. 1 depicts a perspective plan view of the vehicle 1, and the lower part of FIG. 1 depicts a perspective side view of the vehicle 1. FIG. 1 depicts an X-axis, a Y-axis, and a Z-axis. The X-axis and the Y-axis are parallel to the horizontal direction. The Z axis is parallel to the vertical direction. The positive direction of the X-axis indicates the direction to the right of the vehicle 1. The positive Y direction indicates the forward direction of the vehicle 1. The positive direction of the Z axis indicates the direction upward with respect to the vehicle 1.

As depicted in FIG. 1, seven seats S are arranged in the vehicle 1. The seven seats S are arranged in three rows along the Y-axis direction. The seven seats S are arranged in the first, second, and third rows from the positive direction to the negative direction of the Y-axis. Each of the first, second, and third rows is made up of a plurality of seats S, and the plurality of seats S are arranged in the X-axis direction.

The first row is made up of seat S1 and seat S2. The seat S1 is a so-called "driver's seat" where the driver sits. Seat S2 is a so-called "passenger seat". Seat S2 is disposed in the negative direction of the X axis relative to seat S1. The second row is made up of seat S3, seat S4, and seat S5. Seat S4 is disposed in the negative direction of the X axis relative to seat S3. Seat S5 is disposed in the negative direction of the X axis relative to seat S4. The third row is made up of seat S6 and seat S7. Seat S7 is disposed in the negative direction of the X axis relative to seat S6. In the following description, when not distinguishing between seat S1 to seat S7, each of seats S1 to S7 may be referred to as seat S.

Each of the seats S is composed of a seating part SA, a backrest SB, and a headrest SC. An occupant sits in the seating part SA. The backrest SB supports the back of an occupant M. The headrest SC supports the head of the occupant M. In the present embodiment, the occupant M refers to a person sitting in a seat S inside the vehicle 1. The occupant M includes the driver.

As depicted in FIG. 1, an occupant sensing device 11 is disposed on, for example, a dashboard. A camera 12 is disposed on a front upper surface of the vehicle 1. The camera 12 generates an image PC that includes an occupant M in the vehicle 1 and seats S positioned in the vehicle 1, in other words seat S1 to seat S7. A left-right field of view θ1 and an up-down field of view θ2 of the camera 12 are set such that an image PC includes the occupant M and seats S1 to seat S7 inside the vehicle 1. The camera 12 includes an image sensor such as a charge-coupled device (CCD) or a complementary metal-oxide-semiconductor (CMOS), and a data processing circuit that generates an image PC from the image sensor.

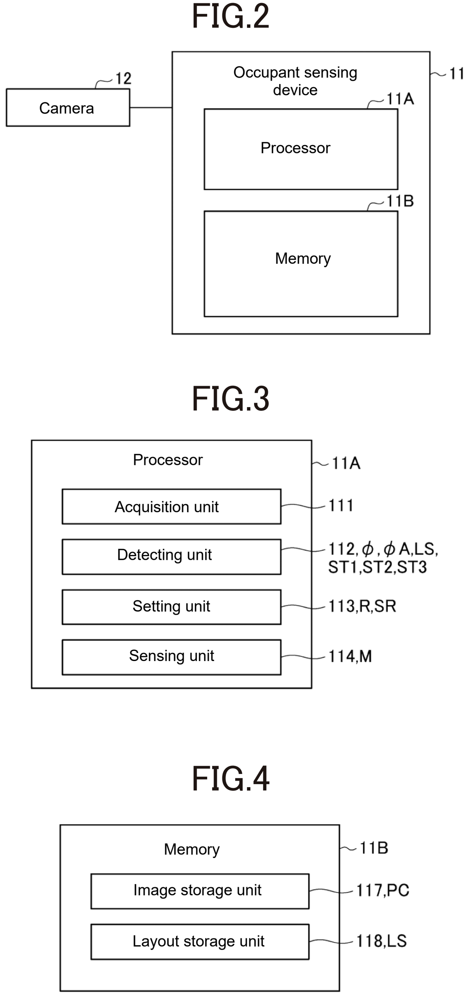

FIG. 2 is a diagram depicting an example of the configuration of the occupant sensing device 11. The occupant sensing device 11 is a computer including a processor 11A such as a CPU (Central Processing Unit) or an MPU (Micro-Processing Unit), and a memory 11B such as a ROM (Read-Only Memory) or a RAM (Random-Access Memory). In addition to these devices, the occupant sensing device 11 also includes a storage device such as a hard disk drive (HDD) or a solid-state drive (SSD), an interface circuit for connecting sensors and peripheral devices and the like, and an on-vehicle network communication circuit for communicating with other on-vehicle devices via the on-vehicle network. The occupant sensing device 11 achieves various functional configurations by the processor 11A executing control programs stored in the memory 11B.

FIG. 3 is a diagram depicting an example of the functional configuration of the processor 11A of the occupant sensing device 11. FIG. 4 is a diagram depicting an example of the functional configuration of the memory 11B of the occupant sensing device 11. As depicted in FIG. 3, the processor 11A included in the occupant sensing device 11 includes, for example, an acquisition unit 111, a detection unit 112, a setting unit 113, and a sensing unit 114 as functional units. The processor 11A executes the control program stored in the memory 11B, causing the processor 11A to function as the acquisition unit 111, the detection unit 112, the setting unit 113, and the sensing unit 114. As depicted in FIG. 4, the memory 11B includes an image storage unit 117 and a layout storage unit 118. The processor 11A executes the control program stored in the memory 11B, causing the memory 11B to function as the image storage unit 117 and the layout storage unit 118.

The image storage unit 117 stores the image PC. The image PC is generated by the camera 12. The image PC is acquired from the camera 12 by the acquisition unit 111. The image PC is stored in the image storage unit 117 by the acquisition unit 111.

The layout storage unit 118 stores various layouts LS of the seats S of the vehicle 1 in advance. The various layouts LS include the basic layout LS depicted in FIG. 1, a layout LS including a seat S that is flipped-up, a layout LS including a seat S that is folded down, and a layout LS including a seat S that is reclined at a prescribed angle φA or more. Each of the seats S that are flipped-up, folded, and reclined at a prescribed angle φA or more is, for example, one of seat S2, seat S3, seat S4, seat S5, seat S6, or seat S7.

The acquisition unit 111 acquires an image PC of an occupant M in the vehicle 1 and a seat S positioned in the vehicle 1. The acquisition unit 111 acquires an image PC from the camera 12. The acquisition unit 111 stores the acquired image PC in the image storage unit 117. The image PC includes the occupant M in the vehicle 1 and the seat S1 to seat S7.

Based on the image PC, the detection unit 112 detects, for each seat S positioned in the vehicle 1, whether or not the seat S is flipped-up, whether or not the seat S is folded, and whether or not the seat S is reclined by a prescribed angle φA or more, as the layout LS of the seat S. The inclination angle φ of the seat S indicates the angle formed between the seating part SA and the backrest SB. The tilt angle φ is depicted in FIG. 1. The prescribed angle φA is, for example, 150 degrees. The detection unit 112 detects whether or not the inclination angle φ of the seat S is reclined to a prescribed angle φA or more.

The seat S being flipped-up means that the backrest SB of the seat S is folded toward the seating part SA and the seat is stowed along the wall inside the vehicle 1, in other words, flipped-up. The seat S being folded means that the backrest SB of the seat S is folded towards the seating part SA and the seat S is positioned on the floor of the vehicle 1.

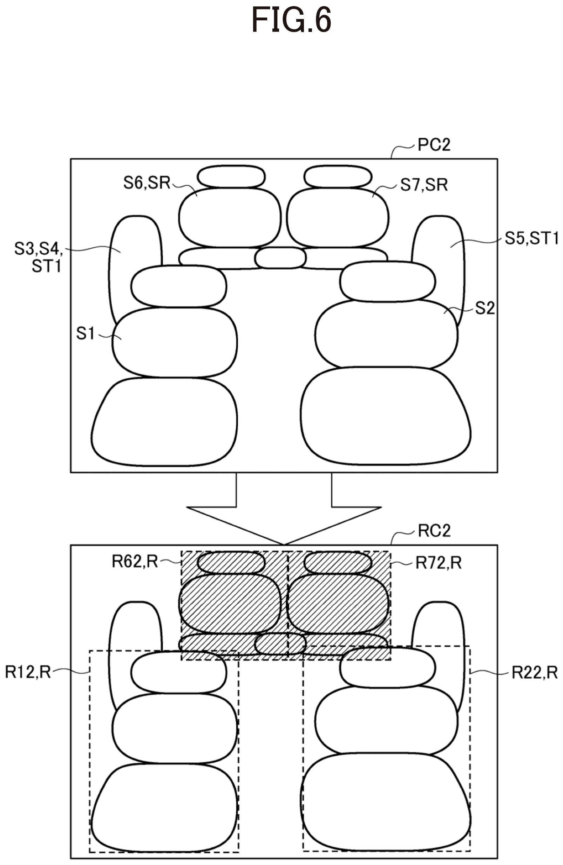

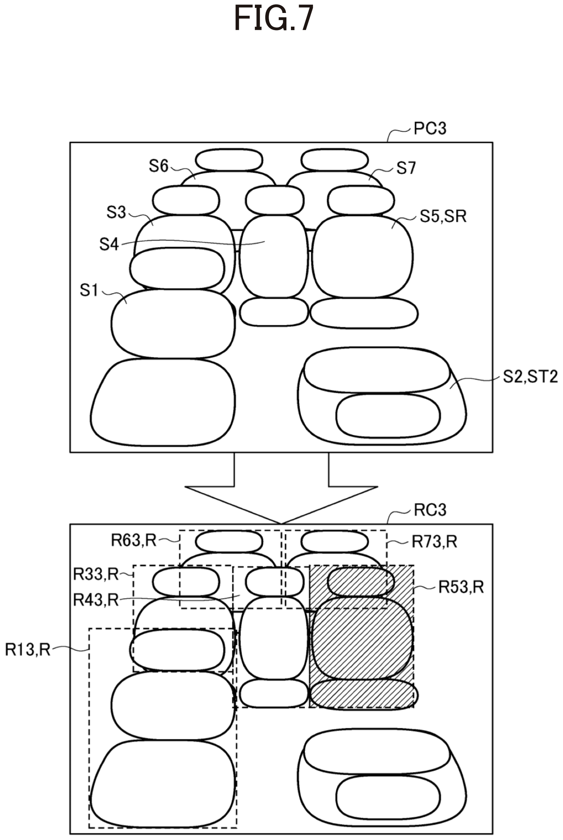

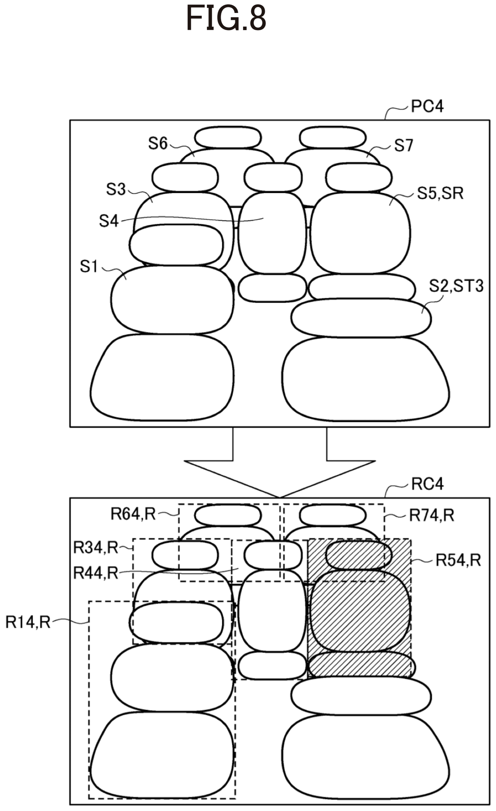

In the following description, the state in which the seat S is flipped-up may be referred to as a flipped-up state ST1. The state in which the seat S is folded may be referred to as a folded state ST2. The state in which the seat S is reclined by a prescribed angle φA or more may be referred to as a reclined state ST3. The detection unit 112 detects, as the layout LS of the seat S, whether or not the seat S is in the flipped-up state ST1, the folded state ST2, or the reclined state ST3. The flipped-up state ST1 will be further described with reference to FIG. 6. The folded state ST2 will be further described with reference to FIG. 7. The reclined state ST3 will be further described with reference to FIG. 8.

The detection unit 112 may detect the layout LS of the seats S by referring to the layout LS of the seats S stored in the layout storage unit 118 based on the image PC, for example. In other words, the detection unit 112 may detect, for example, which seat S layout LS among the seat S layouts LS stored in the layout storage unit 118 corresponds to the seat S layouts LS of the image PC.

The setting unit 113 sets, in the image PC, a region R corresponding to a seat S in which an occupant M can sit, in accordance with the seat S layout LS. When the seat S is flipped-up, the setting unit 113 does not set the region R corresponding to the flipped-up seat S in the image PC. When the seat S is folded, the setting unit 113 does not set the region R corresponding to the folded seat S in the image PC. When the seat S is reclined at a prescribed angle φA or more, the setting unit 113 does not set the region R corresponding to the seat S reclined at the prescribed angle φA or more in the image PC. In other words, the setting unit 113 does not set the region R corresponding to the seat S in the flipped-up state ST1, the folded state ST2, or the reclined state ST3 in the image PC.

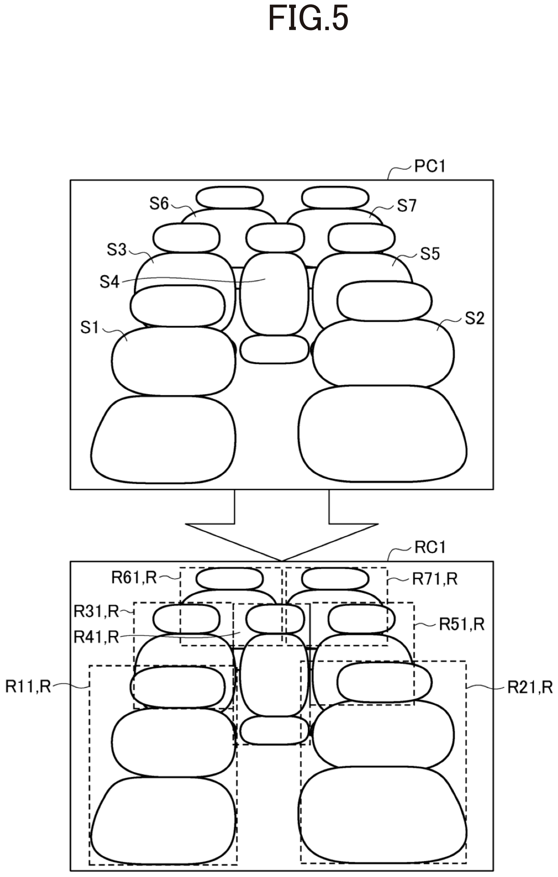

When a seat S is flipped-up, if a rear seat SR, which is a seat S positioned behind the flipped-up seat S, is positioned in the vehicle 1, the setting unit 113 expands a region R corresponding to the rear seat SR in the image PC. When the seat S is folded, if a rear seat SR, which is a seat positioned behind the folded seat S, is positioned in the vehicle 1, the setting unit 113 expands the region R corresponding to the rear seat SR in the image PC. When the seat S is reclined by a prescribed angle φA or more, if a rear seat SR, which is a seat positioned behind the seat S that is reclined by the prescribed angle φA or more, is positioned in the vehicle 1, the setting unit 113 expands the region R corresponding to the rear seat SR in the image PC. In other words, when a rear seat SR, which is a seat S positioned behind a seat S that is in a flipped-up state ST1, a folded state ST2, or a reclined state ST3, is positioned within the vehicle 1, the setting unit 113 expands the region R corresponding to the rear seat SR in the image PC in the direction in which the seating part SA of the rear seat SR is positioned. This direction may be referred to as "forward" in the present embodiment. "Forward" is the positive direction of the Y axis depicted in FIG. 1, and corresponds to the downward direction in the image PC depicted in FIG. 5 to FIG. 7.

The sensing unit 114 senses whether or not an occupant M is positioned in the seat S based on the image PC corresponding to the region R set by the setting unit 113. The sensing unit 114 detects characteristic points of the body of the occupant M photographed in the image PC, and compares the coordinates of the characteristic points in the image PC with the region R to determine whether the occupant M is sitting in the seat S corresponding to the region R. For example, when the coordinates of the characteristic points in the image PC are included in the region R at a prescribed ratio, the sensing unit 114 senses that the occupant M is sitting in the seat S corresponding to the region R. For example, when the coordinates of the characteristic points in the image PC are not contained in the region R at a prescribed rate, the sensing unit 114 senses that the occupant M is not sitting in the seat S corresponding to the region R.

As a method for sensing whether or not an occupant M is positioned in the seat S, for example, there is a method described in "George Papandreou, et. al., PersonLab: Person Pose Estimation and Instance Segmentation with a Bottom-Up, Part-Based, Geometric Embedding Model". This system uses a convolutional neural network to detect parts of the human body such as the wrists, shoulders, and head as key points, and then estimates the positions of other nearby key points from each detected key point, ultimately sensing whether or not an occupant M is positioned in seat S.

FIG. 5 is a diagram depicting an example of the relationship between the image PC1 and the region R. The image PC1 is an image PC when the layout LS of the seats S is the basic layout. In FIG. 5 to FIG. 8, the image of the occupant M included in the image PC is omitted for the sake of convenience.

The image PC1 depicted in the upper part of FIG. 5 includes images of seat S1 to seat S7. Each of the seat S1 to seat S7 is in a state where an occupant M can sit. The region image RC1 depicted in the lower part of FIG. 5 depicts an example of the region R set by the setting unit 113 for each of seat S1 to seat S7 in the image PC1. Region R11 to region R71 correspond to seat S1 to seat S7 in image PC1, respectively.

FIG. 6 is a diagram depicting an example of the relationship between an image PC2 including a seat S in the flipped-up state ST1 and a region R. As depicted in the image PC2 in the upper part of FIG. 6, seat S3 to seat S5 are in the flipped-up state ST1. In the flipped-up state ST1, the seating part SA is arranged along the side of the body of the vehicle 1, substantially parallel to the YZ plane.

A region image RC2 depicted in the lower part of FIG. 6 depicts an example of the region R set by the setting unit 113 for each of seat S1 to seat S7 in the image PC2. Since seat S3 to seat S5 are in the flipped-up state ST1, the setting unit 113 does not set the region R.

Seat S6 to seat S6 positioned behind seat S3 to seat S5 in the flipped-up state ST1 correspond to the rear seats SR. The setting unit 113 expands forward the region R corresponding to each of the seat S6 to seat S6 in the image PC2. As a result, as depicted by the hatched area in the region image RC2, the setting unit 113 expands forward the regions R61 to R71 corresponding to seats S6 to S6, respectively, in the image PC2 to the regions R62 to R72. "Forward" is the positive direction of the Y axis depicted in FIG. 1, and corresponds to the downward direction in the image PC2 depicted in FIG. 6. For example, the setting unit 113 expands the region R61 based on the image PC so that the region R62 includes the seating part SA, the backrest SB, and the headrest SC that constitute the seat S6. Similarly, the setting unit 113 expands the region R71 based on the image PC, for example, so that the region R72 includes the seating part SA, the backrest SB, and the headrest SC that constitute the seat S7.

FIG. 7 is a diagram depicting an example of the relationship between an image PC3 including the seat S in the folded state ST2 and the region R. As depicted in the image PC2 in the upper part of FIG. 7, the seat S2 is in the folded state ST2. In the folded state ST2, the backrest SB is folded substantially parallel to the XY plane.

A region image RC3 depicted in the lower part of FIG. 7 depicts an example of the region R set by the setting unit 113 for each of seat S1 to seat S7 in the image PC3. Since the seat S2 is in the folded state ST2, the setting unit 113 does not set the region R corresponding to the seat S2 in the region image RC3.

The seat S5 positioned behind the seat S2 in the folded state ST2 corresponds to the rear seat SR. Therefore, the setting unit 113 expands the region R corresponding to the seat S5 forward in the image PC3. As a result, as depicted by the hatched area in the region image RC3, the setting unit 113 expands forward the region R51 (see FIG. 5) corresponding to the seat S5 in the image PC3 to form a region R53.

In FIG. 5, the region R51 is set so as not to include the seating part SA of the rear seat SR. This is because the seating part SA of a seat 51 is not captured in the image PC due to the seat R21 positioned in front of the seat 51, which is the rear seat SR in FIG. 5. On the other hand, in FIG. 7, the seat S2 is folded down, so the seating part SA of the rear seat SR is photographed in the image PC3. Therefore, the setting unit 113 expands the region R corresponding to the seat S5 to a size that includes the seating part SA of the rear seat SR.

"Forward" refers to the positive direction of the Y axis depicted in FIG. 1, and corresponds to the downward direction in the image PC3 depicted in FIG. 7. For example, the setting unit 113 expands the region R51 based on the image PC so that the region R53 includes the seating part SA, the backrest SB, and the headrest SC that constitute the seat S6.

FIG. 8 is a diagram depicting an example of the relationship between an image PC4 including the seat S in the reclined state ST3 and the region R. As depicted in the image PC3 in the upper part of FIG. 6, the seat S2 is in a reclined state ST3. In the reclined state ST3, the seat S is reclined at an inclination angle φ of, for example, 180 degrees.

A region image RC4 depicted in the lower part of FIG. 8 depicts an example of the region R set by the setting unit 113 for each of seat S1 to seat S7 in the image PC4. Since the seat S2 is in the reclined state ST3, the setting unit 113 does not set the region R corresponding to the seat S2 in the region image RC4.

The seat S5 positioned behind the seat S2 in the reclined state ST3 corresponds to the rear seat SR. The setting unit 113 expands the region R corresponding to the seat S5 forward in the image PC4. As a result, as depicted by the hatched area in the region image RC4, the setting unit 113 expands forward the region R51 (see FIG. 5) corresponding to the seat S5 in the image PC4 to form a region R54. As in the case where the rear seat SR is in the folded state ST2, the setting unit 113 expands the region R corresponding to the seat S5 to a size that includes the seating part SA of the rear seat SR. "Forward" is the positive direction of the Y axis depicted in FIG. 1, and corresponds to the downward direction in the image PC4 depicted in FIG. 8. For example, the setting unit 113 expands the region R51 in the image PC4 so that the region R53 includes the seating part SA, the backrest SB, and the headrest SC that constitute the seat S5.

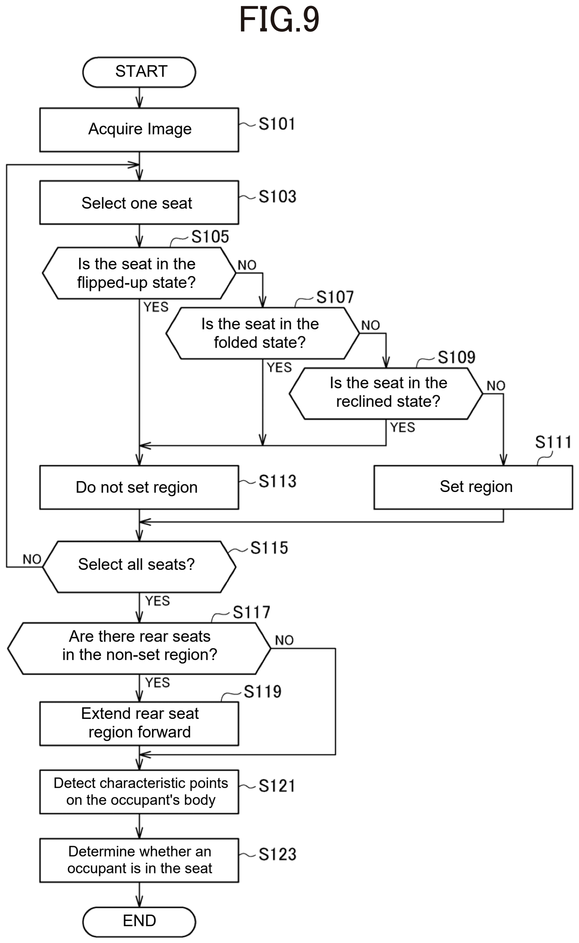

FIG. 9 is a flowchart depicting an example of the processing of the occupant sensing device 11. First, in step S101, the acquisition unit 111 acquires an image PC from the camera 12. In step S103, the detection unit 112 selects one seat S from among a plurality of seats S (seven seats in the present embodiment) positioned in the vehicle 1 based on the image PC. In step S105, the detection unit 112 detects, based on the image PC, whether or not the seat S selected in step S105 is in the flipped-up state ST1. If the detection unit 112 detects that the seat S is in the flipped-up state ST1 (step S105; YES), the process proceeds to step S113. If the detection unit 112 detects that the seat S is not in the flipped-up state ST1 (step S105; NO), the process proceeds to step S107.

In step S107, the detection unit 112 detects, based on the image PC, whether or not the seat S selected in step S103 is in the folded state ST2. If the detection unit 112 detects that the seat S is in the folded state ST2 (step S107; YES), the process proceeds to step S113. If the detection unit 112 detects that the seat S is not in the folded state ST2 (step S107; NO), the process proceeds to step S109.

In step S109, the detection unit 112 detects, based on the image PC, whether or not the seat S selected in step S103 is in the reclined state ST3. If the detection unit 112 detects that the seat S is in the reclined state ST3 (step S109; YES), the process proceeds to step S113. If the detection unit 112 detects that the seat S is not in the reclined state ST3 (step S109; NO), the process proceeds to step S111. In step S111, the setting unit 113 sets the region R corresponding to the seat S selected in step S103 in the image PC. Processing then proceeds to step S115.

If the answer is YES in step S105, if the answer is YES in step S107, or if the answer is YES in step S109, then in step S113 the setting unit 113 does not set the region R corresponding to the seat S selected in step S103 in the image PC. In step S115, the detection unit 112 senses whether or not all of the seven seats S positioned in the vehicle 1 have been selected. If the detection unit 112 senses that all of the seven seats S have not been selected (step S115; NO), the process returns to step S103. If the detection unit 112 senses that all of the seven seats S have been selected (step S115; YES), the process proceeds to step S117.

In step S117, the setting unit 113 senses whether or not a rear seat SR, which is a seat S positioned behind a seat S whose region R is not set in the image PC, is positioned within the vehicle 1. If the setting unit 113 senses that the rear seat SR is not positioned in the vehicle 1 (step S117; NO), the process proceeds to step S121. If the setting unit 113 senses that the rear seat SR is positioned within the vehicle 1 (step S117; YES), in step S119, the setting unit 113 expands forward the region R corresponding to the rear seat SR in the image PC. In step S121, the sensing unit 114 detects characteristic points of the body of the occupant M captured in the image PC. In step S123, the sensing unit 114 senses whether or not an occupant M is positioned in the seat S based on the image PC corresponding to the region R set by the setting unit 113. Then the process ends.

Step S101 corresponds to an example of an "acquisition step". Steps S105, S107, and S109 correspond to an example of a "detection step". Steps S111 and S113 correspond to an example of a "setting step". Step S121 corresponds to an example of a "sensing step".

As described above with reference to FIG. 1 to FIG. 9, the occupant sensing device 11 according to the present embodiment includes an acquisition unit 111 that acquires an image PC including an occupant M in the vehicle 1 and a seat S positioned in the vehicle 1; a detection unit 112 that detects, based on the image PC, for each of the seats S positioned in the vehicle 1, whether or not the seat S is flipped-up, whether or not the seat S is folded, and whether or not the seat S is reclined by a prescribed angle φA or more, as a layout LS of the seat S; a setting unit 113 that sets, in the image PC, a region R corresponding to the seat S in which the occupant M can sit, according to the layout LS of the seats S; and a sensing unit 114 that senses whether or not the occupant M is positioned in the seat S based on the region R set by the setting unit 113.

The occupant sensing method according to the present embodiment includes acquiring an image PC including an occupant M in the vehicle 1 and a seat S positioned in the vehicle 1; detecting, based on the image PC, for each of the seats S positioned in the vehicle 1, whether or not the seat S is flipped-up, whether or not the seat S is folded, and whether or not the seat S is reclined by a prescribed angle φA or more, as a layout LS of the seat S; setting, in the image PC, a region R corresponding to the seat S in which the occupant M can sit, according to the layout LS of the seats S; and sensingwhether or not the occupant M is positioned in the seat S based on the region R set in the setting step.

As a layout LS of a seat S, for each seat S positioned inside the vehicle 1, whether or not the seat S is flipped-up, whether or not the seat S is folded, and whether or not the seat S is reclined by a prescribed angle φA or more is detected. Since the region R corresponding to the seat S where the occupant M can sit is set in the image PC according to the layout LS of the seat S, the region R can be set appropriately. Since whether or not the occupant M is sitting in the seat S is sensed based on the region R, whether or not the occupant M is sitting in the seat S can be sensed in an appropriate manner.

With the occupant sensing device 11, when the seat S is flipped-up, the setting unit 113 does not set the region R corresponding to the flipped-up seat S in the image PC; when the seat S is folded up, the setting unit does not set the region R corresponding to the folded seat S in the image PC; and when the seat S is reclined by a prescribed angle φA or more, the setting unit does not set the region R corresponding to the seat S reclined by the prescribed angle φA or more in the image PC.

In the setting step of the occupant sensing method, when the seat S is flipped-up, the region R corresponding to the flipped-up seat S is not set in the image PC; when the seat S is folded down, the region R corresponding to the folded seat S is not set in the image PC; and when the seat S is reclined at a prescribed angle φA or more, the region R corresponding to the seat S reclined at a prescribed angle φA or more is not set in the image PC.

Since the region R corresponding to the seat S that is flipped-up, the seat S that is folded, or the seat S that is reclined at a prescribed angle φA or more is not set in the image PC, the region R can be set appropriately. Therefore, whether or not an occupant M is sitting in the seat S can be sensed.

In the occupant sensing device 11, when the seat S is folded up, if the rear seat SR, which is the seat positioned behind the folded seat S, is positioned within the vehicle 1, the setting unit 113 expands forward the region R corresponding to the rear seat SR in the image PC; when the seat S is folded down, if the rear seat SR, which is the seat S positioned behind the folded seat S, is positioned within the vehicle 1, the setting unit expands forward the region R corresponding to the rear seat SR in the image PC; and when the seat S is reclined by a prescribed angle φA or more, if the rear seat SR, which is the seat S positioned behind the seat S that has been reclined by the prescribed angle φA or more, is positioned within the vehicle 1, the setting unit expands forward the region R corresponding to the rear seat SR in the image PC.

In the occupant sensing method described above, in the setting step, when the seat S is folded up, if the rear seat SR, which is the seat positioned behind the folded seat S, is positioned within the vehicle 1, the setting unit expands forward the region R corresponding to the rear seat SR in the image PC; when the seat S is folded down, if the rear seat SR, which is the seat S positioned behind the folded seat S, is positioned within the vehicle 1, the setting unit expands forward the region R corresponding to the rear seat SR in the image PC; and when the seat S is reclined by a prescribed angle φA or more, if the rear seat SR, which is the seat S positioned behind the seat S that has been reclined by the prescribed angle φA or more, is positioned within the vehicle 1, the setting unit expands forward the region R corresponding to the rear seat SR in the image PC.

A region R corresponding to a rear seat SR, which is a seat S positioned behind a seat S that is flipped-up, a seat S that is folded down, or a seat S that is reclined at a prescribed angle φA or more, is expanded forward. Therefore, the region R can be set appropriately. As a result, whether or not an occupant M is seated in the seat S can be sensed.

The present embodiment described above merely exemplifies one embodiment of the present invention, and can be arbitrarily modified and applied without departing from the gist of the present invention.

In the present embodiment, a case where seven seats S are arranged in the vehicle 1 has been described, but the embodiment is not limited to this. For example, the vehicle 1 may have two or more rows of seats S arranged in the front-to-back direction, and three or more seats S arranged therein. In the vehicle 1, for example, the seats S may be arranged in two rows in the front-to-back direction, and a total of four seats S may be arranged. In the vehicle 1, for example, the seats S may be arranged in three rows in the front-to-back direction, and a total of six seats S may be arranged.

In the present embodiment, the vehicle 1 is described as having seat S3 to seat S5 that can be in a flipped-up state ST1, and a seat S2 that can be in a folded state ST2 or a reclined state ST3, but the embodiment is not limited to this. The vehicle 1 may be provided with at least one seat S that can be in one of the flipped-up state ST1, the folded state ST2, or the reclined state ST3. For example, the vehicle 1 may have only the seat S that can be placed in the flipped-up state ST1. For example, an aspect where the vehicle 1 has only seats S that can be placed in the folded state ST2 is feasible. For example, an aspect where the vehicle 1 has only seats S that can be placed in the reclined state ST3 is feasible.

An aspect where the vehicle 1 has a seat S that can be in one state and a seat S that can be in any one of the other states is feasible. The seat S that can be in one state is a seat S that can be in at least one of the flipped-up state ST1, the folded state ST2, or the reclined state ST3. The seat S that can be in any one of the other states is a seat S that can be in at least one other state of the flipped-up state ST1, the folded state ST2, and the reclined state ST3. The vehicle 1 may include, for example, a seat S that can be in a flipped-up state ST1 and a seat S that can be in a folded state ST2. The vehicle 1 may have, for example, a seat S that can be in a flipped-up state ST1 and a seat S that can be in a reclined state ST3. The vehicle 1 may include, for example, a seat S that is in a folded state ST2 and a seat S that is in a reclined state ST3.

In the present embodiment, the case where the layout LS of the seat S is changed by placing the seat S in the flipped-up state ST1, the folded state ST2, or the reclined state ST3 has been described, but the embodiment is not limited to this. For example, at least one seat S may be configured to be detachable from the body of the vehicle 1. For example, all the seats S2 to S7 other than the seat S1 where the driver sits may be configured to be detachable. In this case, the layout LS of the seats S can be varied in a variety of ways. For example, at least one seat S may be configured to be retractable into the body of the vehicle 1. For example, all seats S2 to S7 other than the driver's seat S1 may be configured to be retractable. In this case, the layout LS of the seats S can be varied in a variety of ways.

In the present embodiment, the setting unit 113 extends forward the region R corresponding to the rear seat SR, which is the seat S positioned behind the seat S in the flipped-up state ST1, the folded state ST2, or the reclined state ST3, but the embodiment is not limited to this. The setting unit 113 may at least extend forward the region R corresponding to the rear seat SR, which is the seat S positioned behind the seat S in the reclined state ST3.

For example, FIG. 2 to FIG. 4 depict structural elements classified according to their main processing contents in order to facilitate understanding of the present invention, and the structural elements can be further classified into more structural elements according to the processing contents. In addition, a single structural element can be classified so as to execute more processing. The processing of each structural element may be executed by a single piece of hardware, or may be executed by a plurality of pieces of hardware. The processing of each structural element may be achieved by one program or may be achieved by a plurality of programs.

In the present embodiment, the occupant sensing device 11 includes an acquisition unit 111, a detection unit 112, a setting unit 113, a sensing unit 114, and an image storage unit 117, but is not limited to this. A server device communicably connected to the occupant sensing device 11 via a network such as the Internet may include, for example, at least one of the detection unit 112, the setting unit 113, and the sensing unit 114. The server device may include, for example, the detection unit 112. In this case, the load on the occupant sensing device 11 can be reduced.

When the occupant sensing device 11 of the present invention is achieved using a computer, the control program executed by the computer can be configured in the form of a recording medium or a transmission medium for transmitting the control program. The recording medium may be a magnetic or optical recording medium or a semiconductor memory device. Specific examples of such recording media include portable and stationary recording media such as flexible disks, HDDs, CD-ROMs (Compact Disk Read-Only Memories), DVDs, Blu-ray (registered trademark) Discs, magneto-optical disks, flash memories, and card-type recording media. The recording medium may be a non-volatile storage device such as a RAM, a ROM, or an HDD provided in the occupant sensing device 11. The occupant sensing device 11 may download the control program from a server device communicably connected to the occupant sensing device 11 via a network.

For example, the processing units in the flowchart depicted in FIG. 9 are divided according to the main processing content in order to facilitate understanding the processing of the occupant sensing device 11, and the present invention is not limited by the manner in which the processing units are divided or their names. The processing of the occupant sensing device 11 may be divided into more processing units depending on the processing content. The processing of the occupant sensing device 11 may be divided so that one processing unit includes even more processes.

### LIST OF REFERENCE SIGNS

1. Vehicle, 11. Occupant sensing device, 11A. Processor, 111. Acquisition unit, 112. Detection unit, 113. Setting unit, 114. Sensing unit, 11B. Memory, 116. Control program, 117. Image storage unit, 118. Layout storage unit, 12. Camera, LS. Layout, M. Occupant, PC, PC1 to PC4. Image, RC1 to RC4. Region image, R. Region, S, S1 to S7. Seat, SA. Seating part, SB. Backrest, SC. Headrest, SR. Rear seat, ST1. Flipped-up state, ST2. Folded state, ST3. Reclined state, θ1, 02. Field of view, φ, Inclination angle, φA. Prescribed angle.

## Claims

1. An occupant sensing device (11) comprising:
an acquisition unit (111) that is configured to acquire an image (PC) capturing an occupant (M) and seats (S) in a vehicle (1);
a detection unit (112) that is configured to detect, based on the captured image (PC) and for each of the seats (S) in the vehicle (1), whether or not the seat (S) is flipped-up, whether or not the seat (S) is folded, and whether or not the seat (S) is reclined by a prescribed angle (φA) or more, as a layout (LS) of the seat (S);
a setting unit (113) that is configured to set, in the captured image (PC), a region (R) corresponding to a seat (S) in which the occupant (M) can sit, in accordance with the layout (LS) of the seat (S); and
a sensing unit (114) that is configured to sense whether or not the occupant (M) is positioned in the seat (S) based on the region (R) set by the setting unit (113).

2. The occupant sensing device (11) according to claim 1, wherein the setting unit is configured
not to set, in the captured image (PC), a region (R) corresponding to the flipped-up seat (S) when the seat (S) is flipped-up,
not to set, in the captured image (PC), a region (R) corresponding to the folded seat when the seat (S) is folded, and
not to set, in the captured image (PC), a region (R) corresponding to the reclined seat (S) when the seat (S) is reclined by a prescribed angle (φA) or more.

3. The occupant sensing device (11) according to claim 2, wherein the setting unit (113) is configured
to expand, in the captured image (PC), a region (R) corresponding to a rear seat (SR) when the seat (S) is flipped-up and the rear seat (SR) is present behind the flipped-up seat (S) in the vehicle (1),
to expand, in the captured image (PC), a region (R) corresponding to the rear seat (SR) when the seat (S) is folded and the rear seat (SR) is present behind the folded seat (S) in the vehicle (1), and
to expand, in the captured image (PC), a region (R) corresponding to the rear seat (SR) when the seat (S) is reclined by a prescribed angle (φA) or more and the rear seat (SR) is present behind the reclined seat (S) in the vehicle (1).

4. An occupant sensing method comprising:
acquiring an image (PC) with an occupant (M) and seats (S) in a vehicle (1);
detecting, based on the captured image (PC) and for each of the seats (S) in the vehicle (1), whether or not the seat (S) is flipped-up, whether or not the seat (S) is folded, and whether or not the seat (S) is reclined by a prescribed angle (φA) or more, as a layout (LS) of the seat (S);
setting, in the captured image (PC), a region (R) corresponding to a seat (S) in which the occupant (M) can sit, in accordance with the layout (LS) of the seat (S); and
sensing whether or not the occupant (M) is positioned in the seat (S) based on the set region (R).

5. The occupant sensing method according to claim 4, wherein, the setting step comprises,
not setting, in the captured image (PC), a region (R) corresponding to the flipped-up seat (S) when the seat (S) is flipped-up;
not setting, in the captured image (PC), a region (R) corresponding to the folded seat (S) when the seat (S) is folded; and
not setting, in the captured image (PC), a region (R) corresponding to the reclined seat (S) when the seat (S) is reclined by a prescribed angle (φA) or more.

6. The occupant sensing method according to claim 5, wherein the setting comprises,
expanding, in the captured image (PC), a region (R) corresponding to a rear seat (SR) when the seat (S) is flipped-up and the rear seat (SR) is present behind the flipped-up seat (S) in the vehicle (1);
expanding, in the captured image (PC), a region (R) corresponding to the rear seat (SR) when the seat (S) is folded and the rear seat (SR) is present behind the folded seat (S) in the vehicle (1); and
expanding, in the captured image (PC), a region (R) corresponding to the rear seat (SR) when the seat (S) is reclined by a prescribed angle (φA) or more and the rear seat (SR) is present behind the reclined seat (S) in the vehicle (1).
